# EUROPÄISCHE PATENTSCHRIFT

(11) **EP 3 456 942 B1**
(45) Veröffentlichungstag und Bekanntmachung des Hinweises auf die Patenterteilung: **23.03.2022**
(21) Anmeldenummer: 18189684.6
(22) Anmeldetag: 20.08.2018
(51) Int. Cl.: F02C 7/14, F02C 7/18, F02C 7/224, F04D 29/54, F01D 9/02

(54) **GASTURBINENVERDICHTERGEHÄUSE**
GAS TURBINE COMPRESSOR HOUSING
BOÎTIER DE COMPRESSEUR D'UNE TURBINE À GAZ

(30) Priorität: 13.09.2017 DE 102017216119
(43) Veröffentlichungstag der Anmeldung: 20.03.2019
(73) Patentinhaber: MTU Aero Engines AG, 80995 München (DE)
(72) Erfinder: Humhauser, Werner, 85368 Moosburg (DE)

(56) Entgegenhaltungen:
- WO-A1-2014/100164
- JP-A- H0 754 669
- JP-A- 2009 191 655
- US-A- 5 611 197
- US-A1- 2005 050 901
- US-A1- 2011 135 456

## Beschreibung

Die vorliegende Erfindung betrifft ein Gehäuse für einen Verdichter einer Gasturbine, einen Verdichter und eine Gasturbine mit dem Gehäuse sowie ein Verfahren zum Betreiben der Gasturbine.

Gasturbinenverdichter weisen ein Gehäuse mit einem Arbeitskanal auf, in dem mehrere Laufgitter bzw. beschaufelte Rotoren axial hintereinander angeordnet sind, um Luft im Arbeitskanal zu verdichten und diese einer Brennkammer zuzuführen. Zwischen Laufgitter und einer radial äußeren Arbeitskanalwandung ist ein Radialspalt ausgebildet, der sich im Betrieb thermisch bedingt verändern kann. Eine Vergrößerung des Radialspalts, insbesondere eine thermisch bedingte Vergrößerung im Betrieb und/oder ein konstruktiv größer vorgehaltener bzw. dimensionierter Radialspalt zur Vermeidung eines Anstreifens in verschiedenen Betriebsbedingungen, verschlechtert den Wirkungsgrad des Verdichters bzw. der Gasturbine.

Die US 2011/135456 A1 betrifft eine Gasturbinenanlage, die eine aktive Spaltregelung ermöglicht, um den beim Anfahren erforderlichen Spalt der Turbinenlaufschaufeln der ersten Stufe zu gewährleisten und den minimalen Spalt im Lastbetrieb zu erreichen. In dieser Gasturbinenanlage mit einem Kühler in einem Luftsystem zum Kühlen von Turbinenleitschaufeln der zweiten Stufe werden ein segmentierter Ring der ersten Stufe und ein segmentierter Ring der zweiten Stufe, die den Spitzen der Turbinenleitschaufeln der ersten und zweiten Stufe gegenüberliegen, von demselben Schaufelkranzelement getragen, und eine Kühlluft für die Turbinenstatorschaufeln der zweiten Stufe bildet einen Kühlluftstrom, der den Schaufelkranz kühlt, um die Wärmeausdehnung des Schaufelkranzes und den Spalt bezüglich der Spitzen zu kontrollieren. Die Patentschrift JP 2009 191655 bezieht sich auf ein Gehäuse für einen Verdichter einer Gasturbine mit den Merkmalen der Präambel von Anspruch 1.

Eine Aufgabe einer Ausführung der vorliegenden Erfindung ist es, eine Gasturbine und/oder deren Betrieb zu verbessern.

Diese Aufgabe wird durch ein Gehäuse für einen Verdichter einer Gasturbine mit den Merkmalen des Anspruchs 1 bzw. ein Verfahren mit den Merkmalen des Anspruchs 9 gelöst. Ansprüche 7, 8 stellen einen Verdichter bzw. eine Gasturbine mit einem hier beschriebenen Gehäuse unter Schutz. Vorteilhafte Ausführungsformen der Erfindung sind Gegenstand der Unteransprüche.

Nach einer Ausführung der vorliegenden Erfindung weist ein Gehäuse für einen Verdichter, insbesondere ein Gehäuse eines Verdichters, für eine Gasturbine, insbesondere einer Gasturbine, insbesondere für ein Flugtriebwerk, insbesondere eines Flugtriebwerks, einen Arbeitskanal auf, in dem mehrere Laufgitter bzw. beschaufelte Rotoren mit Laufschaufeln (bezogen auf eine (Haupt)Maschinen- bzw. Rotationsachse des Verdichters) axial hintereinander angeordnet sind bzw. das hierzu bzw. zur Aufnahme dieser Laufgitter vorgesehen, insbesondere eingerichtet ist.

In einer Ausführung ist das Gehäuse mehrteilig ausgebildet, insbesondere axial segmentiert, in einer Ausführung weist es miteinander verschraubte axiale Segmente auf. Hierdurch kann in einer Ausführung seine Herstellung und/oder Montage verbessert werden.

Zusätzlich oder alternativ ist der Verdichter in einer Ausführung ein Mittel- oder Hochdruckverdichter, der stromabwärts hinter bzw. nach einem weiteren Verdichter angeordnet ist. Bei solchen Verdichtern kann die vorliegende Erfindung aufgrund der dort herrschenden Druck- und Temperaturverhältnisse mit besonderem Vorteil verwendet werden.

Nach einer Ausführung der vorliegenden Erfindung weist eine, insbesondere radial äußere, Wandung des Arbeitskanals eine erste Luftentnahme auf, wobei das Gehäuse eine, insbesondere wenigstens abschnittsweise ein- oder mehrkanalige und/oder integral mit dem bzw. durch das Gehäuse selber ausgebildete, Kühlpassage aufweist, die wenigstens temporär, insbesondere wahlweise bzw. schaltbar und/oder in Abhängigkeit von einem (Radial)Spalt zwischen der Arbeitskanalwandung und wenigstens einem der Laufgitter, Luft von der ersten Luftentnahme zu einer ersten Austrittspassage zur Versorgung eines ersten oder mehrerer erster Entnahmeluftverbraucher(s) führt und dadurch die Arbeitskanalwandung kühlt bzw. hierzu eingerichtet ist bzw. verwendet wird, wobei diese erste Austrittspassage stromabwärts (von bzw. nach bzw. hinter) der ersten Luftentnahme angeordnet ist. In einer Ausführung ist die Kühlpassage bei, insbesondere an, der Arbeitskanalwandung angeordnet, insbesondere dieser benachbart, in einer Ausführung wenigstens teilweise durch diese begrenzt bzw. definiert, insbesondere durch eine Oberfläche der Arbeitskanalwandung, die einer den Arbeitskanal begrenzenden bzw. definierenden Oberfläche der Arbeitskanalwandung gegenüberliegt.

Hierdurch kann in einer Ausführung die zur Versorgung eines bzw. mehrerer Entnahmeluftverbraucher entnommene Luft vorteilhaft zur wenigstens abschnittsweisen und/oder temporären Kühlung der Arbeitskanalwandung genutzt und so in einer Ausführung ein Radialspalt zwischen Arbeitskanalwandung und Laufgitter(n), insbesondere konstruktiv bzw. im Auslegungszustand und/oder temporär im Betrieb, reduziert und dadurch vorteilhaft ein Wirkungsgrad gesteigert werden.

Eine Radialrichtung im Sinne der vorliegenden Erfindung erstreckt sich in einer Ausführung in fachüblicher Weise senkrecht auf der (Haupt)Maschinen- bzw. Rotationsachse und der Umfangs- bzw. Rotationsrichtung des Verdichters, so dass "radial außen" insbesondere einen größeren (radialen) Abstand zur (Haupt)Maschinen- bzw. Rotationsachse bezeichnet.

In einer Ausführung grenzt die Kühlpassage wenigstens abschnittsweise an die Arbeitskanalwandung an bzw. ist dieser (radial) benachbart. Zusätzlich oder alternativ sind in einer Ausführung zwischen der ersten Luftentnahme und der ersten Austrittspassage wenigstens ein, insbesondere wenigstens drei, Laufgitter angeordnet bzw. das Gehäuse hierzu eingerichtet.

Hierdurch kann in einer Ausführung (jeweils, insbesondere in Kombination) die Kühlung der Arbeitskanalwandung verbessert werden.

Nach einer Ausführung der vorliegenden Erfindung weist die Arbeitskanalwandung eine zweite Luftentnahme, die stromabwärts (von bzw. nach) der ersten Luftentnahme angeordnet ist, und das Gehäuse eine Abführpassage von dieser zweiten Luftentnahme zu einer zweiten Austrittspassage zur Versorgung eines oder mehrerer Entnahmeluftverbraucher(s), insbesondere des bzw. eines oder mehrerer der ersten Entnahmeluftverbraucher(s) und/oder eines oder mehrerer hiervon verschiedener weiterer Entnahmeluftverbraucher(s), auf. Der bzw. einer oder mehrere der erste(n) und/oder weitere(n) Entnahmeluftverbraucher ist/sind in einer Ausführung (jeweils) ein gasturbinenferner bzw. von der Gasturbine beabstandeter Verbraucher und/oder können eine Abblasung, eine Enteisung, eine Lagersperr- und/oder eine Kabinen- bzw. Zellenbelüftung, oder dergleichen umfassen, insbesondere sein.

Zusätzlich oder alternativ sind in einer Ausführung zwischen der ersten Luftentnahme und der zweiten Luftentnahme wenigstens ein, insbesondere wenigstens zwei, Laufgitter angeordnet bzw. das Gehäuse hierzu eingerichtet.

Hierdurch können in einer Ausführung dieselben oder verschiedene Entnahmeluftverbraucher mit Luft unterschiedlicher Temperaturen und/oder Drücke versorgt werden.

In einer Ausführung ist die zweite Austrittspassage stromaufwärts (von bzw. vor) der ersten Austrittspassage angeordnet, wobei das Gehäuse eine, insbesondere strömungstechnisch trennende bzw. getrennte, insbesondere wenigstens abschnittsweise ein- oder mehrkanalige, (Hin)Durchführung der Kühlpassage durch die Abführpassage aufweist, in einer Ausführung Durchgangskanäle der Kühlpassage durch die Abführpassage bzw. Durchgangskanäle der Abführpassage durch die Kühlpassage geführt sind bzw. diese durchgreifen.

Hierdurch kann in einer Ausführung auch ein Abschnitt der Arbeitskanalwandung stromabwärts (von bzw. nach) der zweiten Luftentnahme durch Luft aus der ersten Luftentnahme bzw. die Kühlpassage gekühlt werden.

In einer Ausführung weist diese Durchführung ein Gehäusebauteil mit axial beidseitig offenen ersten Durchgangskanälen und hiervon (strömungstechnisch) getrennten bzw. hiergegen dichten, radial beidseitig offenen zweiten Durchgangskanälen auf, wobei in einer Weiterbildung die ersten Durchgangskanäle die erste Luftentnahme und erste Austrittspassage und die zweiten Durchgangskanäle die zweite Luftentnahme und zweite Austrittspassage miteinander verbinden, in einer anderen Weiterbildung umgekehrt die zweiten Durchgangskanäle die erste Luftentnahme und erste Austrittspassage und die ersten Durchgangskanäle die zweite Luftentnahme und zweite Austrittspassage miteinander verbinden. In einer Ausführung ist das Gehäusebauteil einteilig und/oder mit wenigstens einem, insbesondere axial, benachbarten weiteren Gehäusebauteil, insbesondere axial, verschraubt und/oder die ersten und zweiten Durchgangskanäle integral miteinander ausgebildet. Insbesondere können die Außenwände der ersten Durchgangskanäle Innenwände der zweiten Durchgangskanäle bilden und umgekehrt.

Hierdurch kann in einer Ausführung die Durchführung verbessert, insbesondere ihr strömungs- und/oder wärmetechnischer Wirkungsgrad erhöht und/oder ihre Herstellung und/oder Montage vereinfacht und/oder ihr Bauraum reduziert werden.

In einer Ausführung bildet das Gehäusebauteil einen Abschnitt der Arbeitskanalwandung. Hierdurch kann in einer Ausführung die Durchführung (weiter) verbessert und/oder Herstellung, Montage und/oder Bauraum des Gehäuses verbessert werden.

In einer Ausführung weist das Gehäuse eine Rückführpassage für Luft, insbesondere Leckageluft, von einem Bereich stromabwärts (von bzw. nach) der zweiten Luftentnahme, insbesondere stromabwärts (von bzw. nach) einem stromabwärtigsten Laufgitter des Verdichters, zu der Abführpassage auf, wobei das Gehäuse eine Durchführung der Rückführpassage durch die Kühlpassage aufweist. In einer Ausführung weist diese Durchführung axial beidseitig offene erste Durchgangskanäle und hiervon (strömungstechnisch) getrennte bzw. hiergegen dichte, radial beidseitig offene zweite Durchgangskanäle auf, wobei in einer Weiterbildung die Rückführpassage die ersten Durchgangskanäle aufweist und die zweiten Durchgangskanäle die erste Luftentnahme und Austrittspassage miteinander verbinden, in einer anderen Weiterbildung umgekehrt die Rückführpassage die zweiten Durchgangskanäle aufweist und die ersten Durchgangskanäle die erste Luftentnahme und Austrittspassage miteinander verbinden.

Hierdurch kann in einer Ausführung vorteilhaft auch Luft von stromabwärts der zweiten Luftentnahme zur Versorgung des bzw. der Entnahmeluftverbraucher(s) genutzt werden, der/die durch die (Luft aus der) zweiten Luftentnahme versorgbar ist/sind bzw. versorgt wird/werden.

In einer Ausführung weist das Gehäuse eine (zusätzliche) Abzapfpassage zur Versorgung des bzw. eines oder mehrerer der ersten Entnahmeluftverbraucher(s) mit Luft von der ersten Luftentnahme auf, wobei die Abzapfpassage, insbesondere axial, von der ersten Austrittspassage beabstandet, in einer Ausführung stromaufwärts (von bzw. vor) der ersten Austrittspassage und/oder der zweiten Austrittspassage angeordnet ist.

Hierdurch kann in einer Ausführung auch kältere Luft aus der ersten Luftentnahme zur Versorgung des ersten Entnahmeluftverbrauchers genutzt werden, die die Kühlpassage nicht oder wenigstens nicht vollständig bzw. bis zur ersten Austrittspassage durchströmt hat.

In einer Ausführung weist das Gehäuse bzw. der Verdichter ein ein- oder mehrteiliges Schaltmittel auf, durch das bzw. mit dem ein Luftstrom durch die erste Austrittspassage und/oder ein Luftstrom durch die zweite Austrittspassage und/oder ein Luftstrom durch die Abzapfpassage wahlweise reduziert, insbesondere gesperrt, wird bzw. werden kann, insbesondere in Abhängigkeit, insbesondere zur wenigstens temporären Reduzierung, von einem Spalt zwischen der Arbeitskanalwandung und wenigstens einem der Laufgitter, bzw. das hierzu eingerichtet ist bzw. verwendet wird, insbesondere zum alternativen bzw. komplementären Reduzieren, insbesondere Sperren, eines Luftstrom entweder durch die erste Austrittspassage oder die Abzapfpassage.

In einer Ausführung kann das Schaltmittel ein oder mehrere Ventile, insbesondere Stell-, insbesondere Sperrventile, und/oder ein Steuermittel zum (An)Steuern, insbesondere Regeln, dieser Ventile aufweisen. In einer Ausführung sind ein oder mehrere Ventile zum Reduzieren, insbesondere Sperren, eines Luftstroms durch die erste Austrittspassage und ein oder mehrere Ventile zum Reduzieren, insbesondere Sperren, eines Luftstrom durch die Abzapfpassage und/oder ein oder mehrere Ventile zum Reduzieren, insbesondere Sperren, eines Luftstrom durch die zweite Austrittspassage in einem gemeinsamen Gehäuse angeordnet. Zusätzlich oder alternativ ist in einer Ausführung wenigstens ein Ventil, insbesondere Ventilglied, zum Reduzieren, insbesondere Sperren, eines Luftstrom durch die erste Austrittspassage und wenigstens ein Ventil, insbesondere Ventilglied, zum Reduzieren, insbesondere Sperren, eines Luftstrom durch die Abzapfpassage gegensinnig miteinander gekoppelt bzw. verstellbar.

Hierdurch kann in einer Ausführung Luft aus der ersten Luftentnahme wahlweise durch die erste Austrittspassage und/oder die Abzapfpassage zu dem bzw. den ersten Entnahmeluftverbraucher(n) geleitet und so insbesondere die Versorgung des/der ersten Entnahmeluftverbraucher(s) und/oder die Kühlung der Arbeitskanalwandung bzw. der Spalt unterschiedlichen Betriebsbedingungen angepasst werden. In einer Ausführung wird zur Erhöhung der Kühlung mehr Luft aus der ersten Luftentnahme durch die Kühlpassage und die erste Austrittspassage geleitet, zur Reduzierung der Kühlung weniger Luft durch die Kühlpassage und die erste Austrittspassage, insbesondere stattdessen mehr Luft aus der ersten Luftentnahme durch die Abzapfpassage, bzw. das Schaltmittel entsprechend verstellt.

In einer Ausführung weist die Kühlpassage einen oder mehrere miteinander kommunizierende, in einer Ausführung axial voneinander beabstandete, Ringräume auf. Zusätzlich oder alternativ weist in einer Ausführung die Abführpassage einen oder mehrere miteinander kommunizierende, in einer Ausführung radial voneinander beabstandete, Ringräume auf. Zusätzlich oder alternativ weist in einer Ausführung die Rückführpassage einen oder mehrere miteinander kommunizierende Ringräume auf.

Zusätzlich oder alternativ ist in einer Ausführung die erste Luftentnahme und/oder Austrittspassage (jeweils) mit einem, insbesondere gegenüber ihr vergrößerten, Ringraum verbunden, insbesondere an diesen angrenzend. Zusätzlich oder alternativ ist in einer Ausführung die zweite Luftentnahme und/oder Austrittspassage (jeweils) mit einem, insbesondere gegenüber ihr vergrößerten, Ringraum verbunden, insbesondere an diesen angrenzend. Zusätzlich oder alternativ ist in einer Ausführung die Abzapfpassage mit einem, insbesondere gegenüber ihr vergrößerten, Ringraum verbunden, insbesondere an diesen angrenzend.

Durch solche Ringräume können in einer Ausführung die Kühlung der Arbeitskanalwandung und/oder die Luftströmung verbessert, insbesondere homogenisiert und/oder Verluste reduziert werden.

Zusätzlich oder alternativ kann in einer Ausführung die erste Luftentnahme und/oder die erste Austrittspassage und/oder die zweite Luftentnahme und/oder die zweite Austrittspassage und/oder die Abzapfpassage (jeweils) mehrere in Umfangsrichtung verteilte Öffnungen oder einen (in Umfangsrichtung) umlaufenden Spalt aufweisen, insbesondere hieraus bestehen. Zusätzlich oder alternativ ist in einer Ausführung die erste Luftentnahme und/oder die zweite Luftentnahme (jeweils) zwischen einem Laufgitter und einem (axial) benachbarten, insbesondere stromaufwärtigen oder - abwärtigen, Leitgitter mit mehreren in Umfangsrichtung verteilten gehäuseseitigen, insbesondere -festen, Leitschaufeln angeordnet.

Durch eine Anordnung einer Luftentnahme zwischen Lauf- und Leitgitter kann in einer Ausführung die Entnahme der Luft und/oder die Strömung im Arbeitskanal verbessert werden. Durch eine Luftentnahme mit verteilten Öffnungen kann in einer Ausführung die Strömung im Arbeitskanal verbessert werden, durch eine Luftentnahme mit einem umlaufenden Spalt die Entnahme der Luft. Durch eine Austritts- bzw. Abzapfpassage mit verteilten Öffnungen kann in einer Ausführung eine Weiterleitung zu dem entsprechenden Entnahmeluftverbraucher bzw. Schaltmittel verbessert werden.

Ein Mittel im Sinne der vorliegenden Erfindung kann hard- und/oder softwaretechnisch ausgebildet sein, insbesondere eine, vorzugsweise mit einem Speicher- und/oder Bussystem daten- bzw. signalverbundene, insbesondere digitale, Verarbeitungs-, insbesondere Mikroprozessoreinheit (CPU) und/oder ein oder mehrere Programme oder Programmmodule aufweisen. Die CPU kann dazu ausgebildet sein, Befehle, die als ein in einem Speichersystem abgelegtes Programm implementiert sind, abzuarbeiten, Eingangssignale von einem Datenbus zu erfassen und/oder Ausgangssignale an einen Datenbus abzugeben. Ein Speichersystem kann ein oder mehrere, insbesondere verschiedene, Speichermedien, insbesondere optische, magnetische, Festkörper- und/oder andere nicht-flüchtige Medien aufweisen. Das Programm kann derart beschaffen sein, dass es die hier beschriebenen Verfahren verkörpert bzw. auszuführen imstande ist, sodass die CPU die Schritte solcher Verfahren ausführen kann und damit insbesondere einen Luftstrom durch die erste und/oder zweite Austrittspassage und/oder durch die Abzapfpassage, insbesondere in Abhängigkeit von einem Spalt zwischen der Arbeitskanalwandung und wenigstens einem der Laufgitter, reduzieren, insbesondere sperren, kann. Ein Computerprogrammprodukt kann in einer Ausführung ein, insbesondere nicht-flüchtiges, Speichermedium zum Speichern eines Programms bzw. mit einem darauf gespeicherten Programm aufweisen, insbesondere sein, wobei ein Ausführen dieses Programms ein System bzw. eine Steuerung, insbesondere einen Computer, dazu veranlasst, ein hier beschriebenes Verfahren bzw. einen oder mehrere seiner Schritte auszuführen.

In einer Ausführung werden ein oder mehrere, insbesondere alle, Schritte des Verfahrens vollständig oder teilweise automatisiert durchgeführt, insbesondere durch das bzw. die Mittel.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Verdichter einer Gasturbine mit einem Gehäuse nach einer Ausführung der vorliegenden Erfindung in einem Meridianhalbschnitt;
- Fig. 2: ein Gehäusebauteil des Gehäuses in einer perspektivischen Ansicht;
- Fig. 3: einen Teil des Gehäuses in einer perspektivischen Ansicht;
- Fig. 4: ein Verfahren zum Betreiben der Gasturbine nach einer Ausführung der vorliegenden Erfindung; und
- Fig. 5: ein Schaltmittel in einer perspektivischen Ansicht.

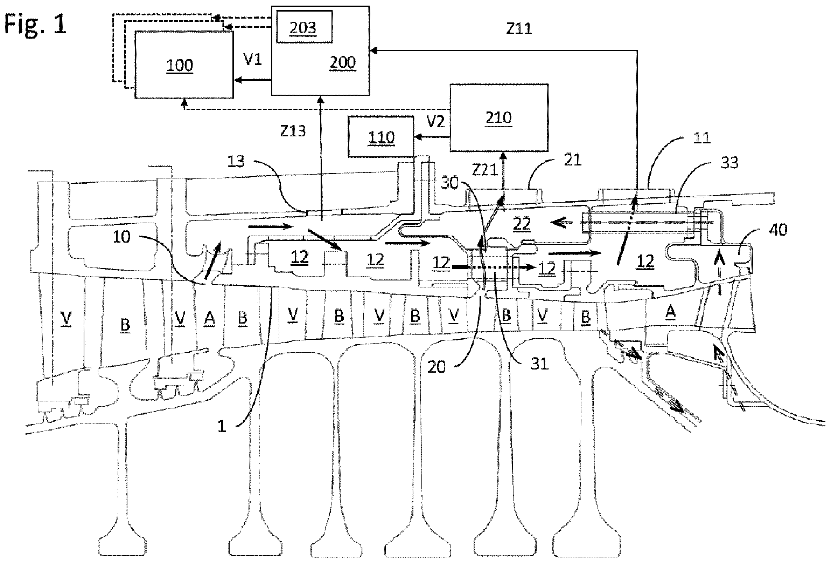

Fig. 1 zeigt einen Verdichter einer Gasturbine mit einem Gehäuse nach einer Ausführung der vorliegenden Erfindung in einem Meridianhalbschnitt längs einer (Haupt)Maschinen- bzw. Rotationsachse (horizontal in Fig. 1).

Das mehrteilige, axial segmentierte Gehäuse weist einen Arbeitskanal A auf, in dem mehrere Laufgitter bzw. -schaufeln B axial hintereinander angeordnet sind, zwischen denen gehäuseseitige Leitgitter bzw. -schaufeln V angeordnet sind.

Eine radial äußere (oben in Fig. 1) Arbeitskanalwandung 1 weist eine erste Luftentnahme mit einem umlaufenden Spalt 10 und eine zweite Luftentnahme mit einem umlaufenden Spalt 20 stromabwärts (rechts in Fig. 1) hinter der ersten Luftentnahme auf.

Das Gehäuse weist eine erste Austrittspassage mit mehreren in Umfangsrichtung verteilte Öffnungen 11 zur Versorgung eines ersten oder mehrerer erster Entnahmeluftverbraucher(s) 100 auf, die durch Leitungen Z11 mit einem Schaltmittel 200 verbunden ist bzw. sind, welches seinerseits durch Leitungen V1 mit dem bzw. den ersten Entnahmeluftverbraucher(n) 100 verbunden ist.

Das Gehäuse weist weiter eine zweite Austrittspassage 21 zur Versorgung wenigstens eines weiteren Entnahmeluftverbrauchers 110 und/oder des bzw. wenigstens eines der ersten Entnahmeluftverbraucher(s) 100 auf, die durch eine oder mehrere Leitungen Z21 mit einem Schaltmittel 210 verbunden ist, welches seinerseits durch eine bzw. mehrere Leitungen V2 mit dem bzw. den weiteren Entnahmeluftverbraucher(n) 110 bzw. dem bzw. den ersten Entnahmeluftverbraucher(n) 100 verbunden ist.

Die erste Austrittspassage 11 ist stromabwärts nach bzw. hinter der ersten und zweiten Luftentnahme 10, 20 sowie stromabwärts nach der zweiten Austrittspassage 21 angeordnet.

Eine Kühlpassage 12 zur Führung von Luft von der ersten Luftentnahme 10 zur ersten Austrittspassage 11 ist an der Arbeitskanalwandung 1 angeordnet, um diese zu kühlen. Sie weist mehrere miteinander kommunizierende Ringräume auf.

Zwischen der zweiten Luftentnahme 20 und der zweiten Austrittspassage 21 weist das Gehäuse eine Abführpassage 22 zur Führung von Luft (doppellinig in Fig. 1) von der zweiten Luftentnahme 20 zur zweiten Austrittspassage 21 auf, die ebenfalls miteinander kommunizierende Ringräume aufweist.

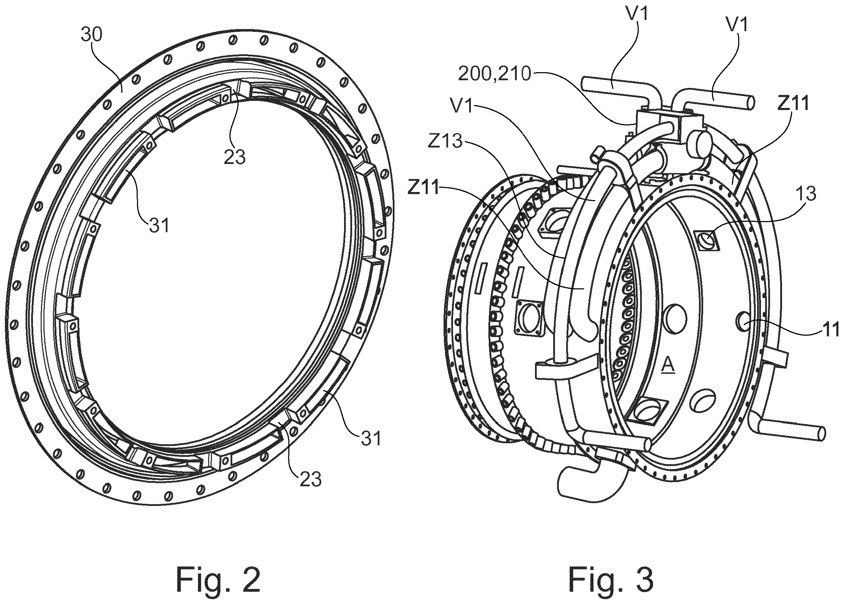

Das Gehäuse weist ein einteiliges Gehäusebauteil 30, welches in Fig. 2 in einer perspektivischen Ansicht gezeigt und axial mit angrenzenden Gehäusebauteilen verschraubt ist, mit axial beidseitig offenen ersten Durchgangskanälen 31, die Ringräume der Kühlpassage 12 verbinden, und hiermit integral ausgebildeten, aber von diesen strömungstechnisch getrennten, radial beidseitig offenen zweiten Durchgangskanälen 23 auf, die einen an die zweite Luftentnahme 20 angrenzenden Ringraum und einen an die zweite Austrittspassage 21 angrenzenden Ringraum der Abführpassage 22 (unten bzw. oben in Fig. 1) verbinden. Mithin bilden Außenwände der ersten Durchgangskanäle Innenwände der zweiten Durchgangskanäle. Zugleich begrenzt bzw. definiert das Gehäusebauteil 30 die zweite Luftentnahme 20 bzw. deren umlaufenden Spalt stromaufwärts und bildet somit den entsprechenden Abschnitt der Arbeitskanalwandung A.

Das Gehäuse weist weiter eine Rückführpassage 40 zur Rückführung von Leckageluft (doppellinig gestrichelt in Fig. 1) zu der Abführpassage 22 auf, die stromabwärts hinter dem stromabwärtigsten Laufgitter ausströmt, wobei das Gehäuse eine Durchführung der Rückführpassage im Form mehrerer Verbindungsrohe 33 durch die Kühlpassage 12 aufweist, die einen an die erste Austrittspassage 11 angrenzenden Ringraum der Kühlpassage 12 durchgreifen.

Das Gehäuse weist weiter eine Abzapfpassage mit mehreren in Umfangsrichtung verteilten Öffnungen 13 zur Versorgung des bzw. der ersten Entnahmeluftverbraucher(s) 100 mit Luft von der ersten Luftentnahme 10 auf, wobei die Abzapfpassage 13 stromaufwärts vor der ersten und zweiten Austrittspassage 11, 21 angeordnet ist.

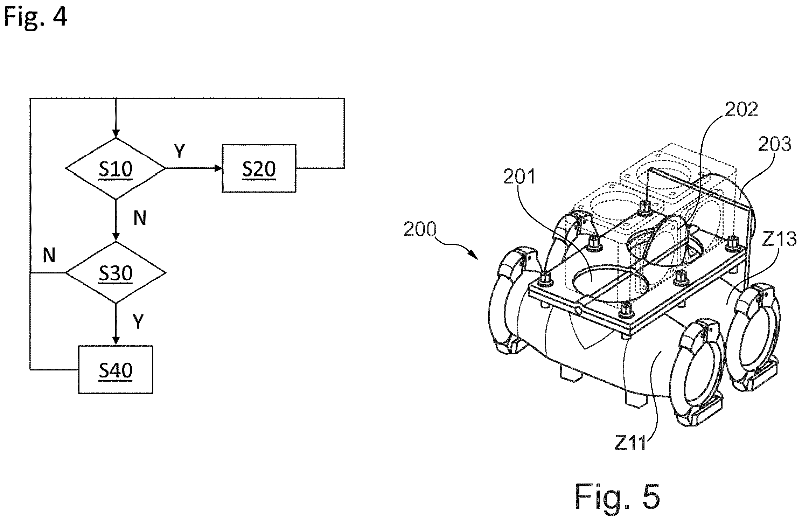

Die Abzapfpassage 13 ist durch Leitungen Z13 mit dem Schaltmittel 200 verbunden, welches in Fig. 5 in perspektivischer Ansicht gezeigt ist.

Wie in Fig. 5 erkennbar, weist das Schaltmittel 200 im Ausführungsbeispiel zwei miteinander starr gekoppelte Schmetterlingsventile 201, 202 auf, wobei das Schließen des Schmetterlingsventils 201 einen Luftstrom durch die Leitungen Z11 bzw. erste Austrittspassage 11 reduziert, ein hierzu gegensinniges Schließen des Schmetterlingsventils 202 alternativ einen Luftstrom durch die Leitungen Z13 bzw. Abzapfpassage 13.

Ein Steuermittel in Form einer entsprechend programmierten Steuerung 203 zum Aktuieren der Schmetterlingsventile 201, 202 des Schaltmittels 200, die in einer Ausführung auch das Schaltmittel 210 steuert, führt ein nachfolgend mit Bezug auf Fig. 4 erläutertes Verfahren zum Betreiben der Gasturbine durch.

In einem Schritt S10 prüft die Steuerung 203, ob zur temporäreren Reduzierung eines Radialspalts zwischen der Arbeitskanalwandung 1 und einem der Laufgitter B eine Kühlung der Arbeitskanalwandung 1 erhöht werden soll und das Schmetterlingsventil 202 noch nicht vollständig geschlossen ist. Ist beides der Fall (S10: "Y"), schließt sie in einem Schritt S20 das Schmetterlingsventil 202 weiter und kehrt zu Schritt S10 zurück.

Andernfalls (S10: "N") prüft die Steuerung 203 in einem Schritt S30, ob zur temporäreren Vergrößerung eines Radialspalts zwischen der Arbeitskanalwandung 1 und einem der Laufgitter B eine Kühlung der Arbeitskanalwandung 1 reduziert werden soll und das Schmetterlingsventil 201 noch nicht vollständig geschlossen ist. Ist beides der Fall (S30: "Y"), schließt sie in einem Schritt S40 das Schmetterlingsventil 201 weiter und kehrt zu Schritt S10 zurück.

Andernfalls (S30: "N"), d. h. wenn die Kühlung der Arbeitskanalwandung 1 weder erhöht noch reduziert werden soll oder dies nicht möglich ist, da das entsprechende Schmetterlingsventil bereits vollständig geschlossen ist, kehrt die Steuerung 203 bzw. das Verfahren zu Schritt S10 zurück, ohne die Schmetterlingsventile 201, 202 zu verstellen.

Man erkennt, dass einerseits durch temporäres Schließen des Schmetterlingsventils 202 bzw. der Abzapfpassage 13 und entsprechend( erhöht)e Kühlung der Arbeitskanalwandung 1 der Radialspalt zwischen Arbeitskanalwandung 1 und Laufgitter B im Betrieb temporär reduziert werden kann. Zusätzlich kann durch die beschriebene Variation der Kühlung auch der konstruktiv vorgesehene bzw. -haltene Radialspalt zwischen Arbeitskanalwandung 1 und Laufgitter B reduziert werden, da die Wahrscheinlichkeit eines Anstreifens im Betrieb durch die Variation der Kühlung reduziert werden kann.

Obwohl in der vorhergehenden Beschreibung exemplarische Ausführungen erläutert wurden, sei darauf hingewiesen, dass eine Vielzahl von Abwandlungen möglich ist. Außerdem sei daraufhingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Arbeitskanalwandung
- 10: erste Luftentnahme
- 11: erste Austrittspassage
- 12: Kühlpassage
- 13: Abzapfpassage
- 20: zweite Luftentnahme
- 21: zweite Austrittspassage
- 22: Abführpassage
- 23: zweite Durchgangskanäle
- 30: Gehäusebauteil (Durchführung)
- 31: erste Durchgangskanälen
- 33: Verbindungsrohre (Durchführung)
- 40: Rückführpassage
- 100: erster Entnahmeluftverbraucher
- 110: weiterer Entnahmeluftverbraucher
- 200,210: Schaltmittel
- 201, 202: Schmetterlingsventil
- 203: Steuerung
- Z11, Z13, Z21, V1, V2: Leitung
- A: Arbeitskanal
- B: Laufgitter
- V: Leitgitter

## Patentansprüche

1. Gehäuse für einen Verdichter einer Gasturbine, mit einem Arbeitskanal (A) zur Aufnahme mehrerer axial hintereinander angeordneter Laufgitter (B), wobei eine Wandung (1) des Arbeitskanals eine erste Luftentnahme (10) aufweist, wobei das Gehäuse eine Kühlpassage (12) zur Kühlung dieser Arbeitskanalwandung (1) durch Führung von Luft von der ersten Luftentnahme (10) zu einer ersten Austrittspassage (11) zur Versorgung wenigstens eines ersten Entnahmeluftverbrauchers (100) aufweist, wobei die erste Austrittspassage (11) stromabwärts der ersten Luftentnahme (10) angeordnet ist, und wobei die Arbeitskanalwandung (1) eine zweite Luftentnahme (20) stromabwärts der ersten Luftentnahme (10) und das Gehäuse eine Abführpassage (22) von dieser zweiten Luftentnahme (20) zu einer zweiten Austrittspassage (21) zur Versorgung wenigstens eines Entnahmeluftverbrauchers (100, 110) aufweist **dadurch gekennzeichnet, dass** die zweite Austrittspassage (21) stromaufwärts der ersten Austrittspassage (11) angeordnet ist und das Gehäuse eine Durchführung (23, 30, 31) der Kühlpassage (12) durch die Abführpassage (22) aufweist.

2. Gehäuse nach dem vorhergehenden Anspruch, **dadurch gekennzeichnet, dass** diese Durchführung ein Gehäusebauteil (30) mit axial beidseitig offenen ersten Durchgangskanälen (31) und hiervon getrennten radial beidseitig offenen zweiten Durchgangskanälen (23) aufweist.

3. Gehäuse nach dem vorhergehenden Anspruch, **dadurch gekennzeichnet, dass** das Gehäusebauteil (30) einen Abschnitt der Arbeitskanalwandung (1) bildet.

4. Gehäuse nach einem der vorhergehenden Ansprüche, **gekennzeichnet durch** eine Rückführpassage (40) für Luft von einem Bereich stromabwärts der zweiten Luftentnahme (20) zu der Abführpassage (22), wobei das Gehäuse eine Durchführung (33) der Rückführpassage (40) durch die Kühlpassage (12) aufweist.

5. Gehäuse nach einem der vorhergehenden Ansprüche, **gekennzeichnet durch** eine von der ersten Austrittspassage (11) beabstandete Abzapfpassage (13) zur Versorgung des ersten Entnahmeluftverbrauchers (100) mit Luft von der ersten Luftentnahme (10), welche insbesondere stromaufwärts der ersten Austrittspassage (11) angeordnet ist.

6. Gehäuse nach einem der vorhergehenden Ansprüche, **gekennzeichnet durch** ein Schaltmittel (200-210) zum wahlweisen, insbesondere alternativen, Reduzieren eines Luftstroms durch die erste und/oder zweite Austrittspassage (11, 21) und/oder durch die Abzapfpassage (13), insbesondere in Abhängigkeit von einem Spalt zwischen der Arbeitskanalwandung (1) und wenigstens einem der Laufgitter (B).

7. Verdichter für eine Gasturbine, der ein Gehäuse nach einem der vorhergehenden Ansprüche aufweist, in dessen Arbeitskanal (A) mehrere Laufgitter (B) axial hintereinander angeordnet sind.

8. Gasturbine, insbesondere für ein Flugtriebwerk, mit einem Verdichter nach dem vorhergehenden Anspruch.

9. Verfahren zum Betreiben einer Gasturbine nach dem vorhergehenden Anspruch, wobei wenigstens temporär, insbesondere wahlweise, Luft zur Kühlung der Arbeitskanalwandung (1) von der ersten Luftentnahme (10) durch die Kühlpassage (12) zu der ersten Austrittspassage (11) geführt wird.

10. Verfahren nach dem vorhergehenden Anspruch, wobei Luft in Abhängigkeit von einem Spalt zwischen der Arbeitskanalwandung (1) und wenigstens einem der Laufgitter (B) von der ersten Luftentnahme (10) durch die Kühlpassage (12) zu der ersten Austrittspassage (11) geführt wird.

## Claims

1. Housing for a compressor of a gas turbine, comprising a working duct (A) for accommodating a plurality of rotor cascades (B) arranged axially one behind the other, a wall (1) of the working duct having a first air bleed (10), the housing having a cooling passage (12) for cooling this working duct wall (1) by guiding air from the first air bleed (10) to a first outlet passage (11) in orderto supply at least one first bleed air consumer (100), the first outlet passage (11) being arranged downstream of the first air bleed (10), and the working duct wall (1) having a second air bleed (20) arranged downstream of the first air bleed (10) and the housing having a discharge passage (22) from this second air bleed (20) to a second outlet passage (21) in order to supply at least one bleed air consumer (100, 110), **characterized in that** the second outlet passage (21) is arranged upstream of the first outlet passage (11) and **in that** the housing has a feedthrough (23, 30, 31) of the cooling passage (12) through the discharge passage (22).

2. Housing according to the preceding claim, **characterized in that** this feedthrough has a housing component (30) comprising first through-ducts (31) which are open axially on both sides and second through-ducts (23) which are separated therefrom and are open radially on both sides.

3. Housing according to the preceding claim, **characterized in that** the housing component (30) forms a portion of the working duct wall (1).

4. Housing according to any of the preceding claims, **characterized by** a return passage (40) for air from a region downstream of the second air bleed (20) to the discharge passage (22), the housing having a feedthrough (33) of the return passage (40) through the cooling passage (12).

5. Housing according to any of the preceding claims, **characterized by** a tap passage (13), which is spaced from the first outlet passage (11), in orderto supply the first bleed air consumer (100) with airfrom the first air bleed (10), which is arranged in particular upstream of the first outlet passage (11).

6. Housing according to any of the preceding claims, **characterized by** a switching means (200-210) for selectively, in particular alternatively, reducing an air flow through the first and/or second outlet passage (11, 21) and/orthrough the tap passage (13), in particular on the basis of a gap between the working duct wall (1) and at least one of the rotor cascades (B).

7. Compressor for a gas turbine, which compressor has a housing according to any of the preceding claims, in the working duct (A) of which a plurality of rotor cascades (B) are arranged axially one behind the other.

8. Gas turbine, in particular for an aircraft engine, comprising a compressor a ccording to the preceding claim.

9. Method for operating a gas turbine according to the preceding claim, wherein at least temporarily, in particular selectively, air for cooling the working duct wall (1) is routed from the first air bleed (10) through the cooling passage (12) to the first outlet passage (11).

10. Method according to the preceding claim, wherein air is guided from the first air bleed (10) through the cooling passage (12) to the first outlet passage (11) on the basis of a gap between the working duct wall (1) and at least one of the rotor cascades (B).

## Revendications

1. Carter destiné à un compresseur d'une turbine à gaz, comportant un canal de travail (A) permettant de recevoir plusieurs grilles mobiles (B) disposées axialement les unes derrière les autres, une paroi (1) du canal de travail présentant un premier prélèvement d'air (10), le carter présentant un passage de refroidissement (12) permettant de refroidir ladite paroi de canal de travail (1) en acheminant de l'air du premier prélèvement d'air (10) jusqu'à un premier passage de sortie (11) pour alimenter au moins un premier consommateur d'air de prélèvement (100), le premier passage de sortie (11) étant disposé en aval du premier prélèvement d'air (10), et la paroi de canal de travail (1) présentant un second prélèvement d'air (20) en aval du premier prélèvement d'air (10) et le carter présentant un passage d'évacuation (22) dudit second prélèvement d'air (20) jusqu'à un second passage de sortie (21) pour alimenter au moins un consommateur d'air de prélèvement (100, 110), **caractérisé en ce que** le second passage de sortie (21) est disposé en amont du premier passage de sortie (11) et le carter présente une traversée (23, 30, 31) du passage de refroidissement (12) à travers le passage d'évacuation (22).

2. Carter selon la revendication précédente, **caractérisé en ce que** ladite traversée présente un élément de carter (30) comportant des premiers canaux traversants (31) ouverts axialement des deux côtés et des seconds canaux traversants (23) ouverts radialement des deux côtés et séparés desdits premiers canaux traversants.

3. Carter selon la revendication précédente, **caractérisé en ce que** l'élément de carter (30) forme une section de la paroi de canal de travail (1).

4. Carter selon l'une des revendications précédentes, **caractérisé par** un passage de retour (40) d'air d'une zone en aval du second prélèvement d'air (20) jusqu'au passage d'évacuation (22), le carter présentant une traversée (33) du passage de retour (40) à travers le passage de refroidissement (12).

5. Carter selon l'une des revendications précédentes, **caractérisé par** un passage de soutirage (13) espacé du premier passage de sortie (11) et permettant d'alimenter le premier consommateur d'air de prélèvement (100) en air provenant du premier prélèvement d'air (10), lequel passage de soutirage est disposé en particulieren amont du premier passage de sortie (11).

6. Carter selon l'une des revendications précédentes, **caractérisé par** un moyen de commutation (200-210) permettant de réduire sélectivement, en particulier alternativement, un débit d'air à travers le premier et/ou le second passages de sortie (11, 21) et/ou à travers le passage de soutirage (13), en particulier en fonction d'un espace entre la paroi de canal de travail (1) et au moins l'une des grilles mobiles (B).

7. Compresseur destiné à une turbine à gaz, lequel présente un carter selon l'une des revendications précédentes, dans le canal de travail (A) duquel plusieurs grilles mobiles (B) sont disposées axialement les unes derrière les autres.

8. Turbine à gaz, en particulier destinée à un moteur d'aéronef, comportant un compresseur selon la revendication précédente.

9. Procédé de fonctionnement d'une turbine à gaz selon la revendication précédente, dans lequel de l'air permettant de refroidir la paroi de canal de travail (1) est conduit depuis le premier prélèvement d'air (10) jusqu'au premier passage de sortie (11) à travers le passage de refroidissement (12), au moins temporairement, en particulier sélectivement.

10. Procédé selon la revendication précédente, dans lequel de l'air est conduit dep uis le premier prélèvement d'air (10) jusqu'au premier passage de sortie (11) à travers le passage de refroidissement (12) en fonction d'un espace entre la paroi de canal de travail (1) et au moins l'une des grilles mobiles (B).
